# EUROPEAN PATENT SPECIFICATION

(11) **EP 3 730 358 B1**
(45) Date of publication and mention of the grant of the patent: **20.11.2024**
(21) Application number: 18856740.8
(22) Date of filing: 25.04.2018
(51) Int. Cl.: B60L 53/30, B60L 53/36, B60L 53/37, B60L 53/80

(54) **LIFTING SYSTEM FOR BATTERY PACK REPLACEMENT OF VEHICLE**
HEBESYSTEM FÜR DEN BATTERIEPACKWECHSEL EINES FAHRZEUGS
SYSTÈME DE LEVAGE POUR REMPLACEMENT DE BLOC-BATTERIE DE VÉHICULE

(30) Priority: 12.09.2017 CN 201710819401
(43) Date of publication of application: 28.10.2020
(73) Proprietor: Nio Co., Ltd., Shanghai 201804 (CN)
(72) Inventor: DING, Xikun, Jiading Shanghai 201804 (CN); LI, Nan, Jiading Shanghai 201804 (CN); TIAN, Xiaotao, Jiading Shanghai 201804 (CN); MA, Yongyue, Jiading Shanghai 201804 (CN); BENGTSSON, Jan, Jiading Shanghai 201804 (CN)
(74) Representative: Vossius & Partner Patentanwälte Rechtsanwälte mbB
(86) International application number: PCT/CN2018/084440
(87) International publication number: WO 2019/052185

(56) References cited:
- CN-A- 106 143 183
- CN-A- 106 515 681
- CN-A- 106 740 724
- CN-U- 205 022 557
- CN-U- 206 107 206
- US-A- 5 612 606
- US-A1- 2015 307 068
- US-B2- 9 688 252

## Description

### Technical Field

The invention relates to the technical field of battery swapping for an electric vehicle, and in particular to a lifting system for battery swapping of a vehicle.

### Background Art

Electric vehicles are means of transportation that can be driven by electric energy stored in batteries, and thus reduce the vehicle's dependence on fossil fuels. The electric vehicle is an important measure to solve the national energy security problem. Traction batteries are the core of electric vehicles, but the range provided by a traction battery per charge is far from being comparable to that of a traditional means of transportation. Therefore, how to replenish the traction battery quickly and conveniently with electric energy becomes an important factor in the use and promotion of the electric vehicles, but in the current battery charging technology, charging cannot be completed in a few minutes just like refueling. Hence, battery swapping becomes the only possible way to replenish the electric vehicles with electric energy.

In the prior art, a four-column hoister is often used to position the vehicle, which runs through a ramp with a certain width and a long plate to a set position. However, such a positioning method has significant errors and may easily lead to wrong entry, and the demand on the driver's driving experience is extremely high. If the vehicle runs to an incorrect location, it needs to be adjusted continuously to the correct battery swap position before a battery pack can be swapped. Moreover, the lifting synchronization is poor, the positioning accuracy is low, the time for positioning is long, so the user experience is poor.

The document US9688252B2 discloses a battery swap station with a lifting mechanism in which bars are attached next to the two sides of the vehicle in order to lift the vehicle.

The document CN205022557U discloses a battery swap station with a lifting mechanism with a vertical frame structure.

### Summary of the Invention

The technical problem to be solved by the invention is to provide a lifting system for battery swapping of a vehicle, which can quickly and accurately position an incoming vehicle and can ensure that the vehicle is lifted to a first preset position smoothly and steadily, improving the user experience.

In order to solve the above technical problem, the invention is defined by the appended claims and provides a lifting system for battery swapping of a vehicle, the lifting system comprising:
a positioning platform, a lift executing mechanism and a lifting support platform, wherein
the positioning platform is used to support a vehicle, and the positioning platform comprises a positioning structure for defining a stop position for the vehicle and for positioning and adjusting front and rear wheels of the vehicle so as to adjust the vehicle to a first preset position;
the lift executing mechanism is disposed on the positioning platform, the lifting support platform is connected to the lift executing mechanism, and the lift executing mechanism is used to drive the lifting support platform to move in a vertical direction; and
the lifting support platform is used to lift the vehicle on the positioning platform so that the vehicle leaves the positioning mechanism and is lifted to a preset battery swap position.

Further, provided that a travelling direction is an X-direction and a vehicle width direction is a Y-direction, the positioning platform further comprises:
a platform body for supporting the vehicle;
a ramp structure disposed at at least one end, in the X-direction, of the platform body;and
a guide structure disposed at two ends, in the Y-direction, of the platform body.

Further, the positioning structure comprises an X-direction positioning unit and a Y-direction positioning unit, wherein
the X-direction positioning unit is used to determine the stop position in the X-direction for an incoming vehicle; and
the Y-direction positioning unit is used for adjusting the positions of front wheels and of rear wheels in the Y-direction so as to perform positioning in the Y-direction.

Further, the positioning platform further comprises a guide rail and a rack, the guide rail and the rack being embedded in the positioning platform, wherein the guide rail is used to provide a travelling track for a battery swap trolley to enter or exit the positioning platform and determine a travelling direction of the battery swap trolley; and
the rack is used to mesh with a gear on the battery swap trolley to control the moving distance of the battery swap trolley.

Further, the lift executing mechanism comprises a main body frame and a synchronous lifting mechanism, wherein the structure of the main body frame comprises a plurality of column structures disposed at two ends of the positioning platform in the vehicle width direction, one end of the main body frame in the vertical direction is provided with the positioning platform, and the other end thereof in the vertical direction is provided with the synchronous lifting mechanism; and
the synchronous lifting mechanism comprises lifting belts and a driving portion, each of the lifting belts is provided at the respective column structure, one end of the lifting belt is connected to the driving portion and the other end thereof is provided as a free end, and the free end is connected to the lifting support platform.

Further, the driving portion comprises an electric motor, a transmission shaft and an endless transmission belt, wherein
the electric motor is connected to the transmission shaft for driving the transmission shaft to rotate;
the transmission shaft is connected to the endless transmission belt for driving the endless transmission belt to rotate; and
the endless transmission belt is connected to one end of the lifting belt for driving the free end of the lifting belt to ascend or descend along the column structure.

Further, the endless transmission belt comprises a driving wheel, a transmission belt and a driven wheel, wherein
the driving wheel is connected to the transmission shaft and rotates along with the rotation of the transmission shaft;
the transmission belt connects the driving wheel and the driven wheel to form a ring-shaped structure, and the transmission belt rotates clockwise or counterclockwise along with the rotation of the driving wheel and drives the driven wheel to rotate; and
the transmission belt comprises a first transmission section and a second transmission section which are respectively located between the driving wheel and the driven wheel, and the first transmission section and the second transmission section are respectively connected to one of the lifting belts.

Further, a deflection wheel is disposed between two ends of the lifting belt, and the lifting belt wraps around the deflection wheel, with one end connected to the lifting support platform and the other end connected to the first transmission section or the second transmission section.

Further, the lift executing mechanism further comprises a fall prevention portion, which is provided on the column structure, for supporting the lifting support platform in case of breakage or failure of the lifting belt, so as to prevent the lifting support platform from falling.

Further, the lifting support platform comprises a lifting frame and a support structure, wherein
the lifting frame is connected to the free end of the lifting belt; and
the support structure is disposed on the lifting frame for supporting a vehicle lift point.

Further, the support structure is provided with a photographing and positioning mechanism for photographing and positioning the vehicle and the battery swap trolley after the vehicle is lifted to a first preset height and the battery swap trolley enters an area under the vehicle.

Further, the photographing and positioning mechanism comprises:
a photographing unit for photographing a positioning hole of a vehicle body and a positioning pin of the battery swap trolley to obtain photographic data;
a computing unit for computing a current vehicle position deviation according to the photographic data; and
a fine adjustment unit provided in the support structure, for adjusting the position of the vehicle according to the obtained vehicle position deviation.

Further, there are a plurality of support structures for supporting different support points of the vehicle respectively, and the fine adjustment unit comprises a driving portion and a floating portion which are provided on different support structures and are arranged in a travelling direction; the driving portion drives the corresponding support structure to move in the travelling direction so as to drive the vehicle to move; and the floating portion is configured to float with the movement of the vehicle so as to adjust the position of the vehicle.

Further, the floating portion comprises:
a floating unit, a support unit and a restoring unit, wherein
the floating unit is supported on the support unit via universal balls and is able to float in a horizontal plane relative to the support unit; and
the restoring unit is connected to the floating unit for restoring the floating unit.

Further provided is a battery swap system, which comprises the lifting system.

The invention has obvious advantages and beneficial effects as compared with the prior art. By means of the above technical solutions, a lifting system for battery swapping of a vehicle of the invention can achieve considerable technical progress and practicality, has a wide range of industrial utility value, and has at least the following advantages:
(1) the invention has a simple structure, and can achieve quick and accurate positioning, and adjust the position of the vehicle to locate the vehicle in a preset battery swap position, saving on the time for battery swapping, increasing the accuracy and efficiency of battery swapping, and improving the user experience;
(2) the positioning platform can precisely position the battery swap trolley, so that the battery swap trolley can enter the positioning platform smoothly and accurately, thereby increasing the accuracy and efficiency of battery swapping;
(3) the ramp structure can be in a folded state or a deployed state, reducing the space occupied by the positioning platform;
(4) the gap portion between the components of the positioning platform is filled with a fiber-reinforced plastic grille, which not only ensures the smooth entry of the vehicle into the positioning platform, but also reduces the weight of the positioning platform;
(5) the lift executing mechanism realizes synchronous lifting, and can ensure smooth ascending and descending processes of a vehicle; and
(6) the various components of the lifting system can be separately used, thus achieving modularization, easy installation, convenient use and low costs.

The aforementioned description is only an overview of the technical solutions of the invention. In order to clearly understand the technical means of the invention, the invention can be implemented according to the contents of the description; and in order to make the aforementioned and other objects, features and advantages of the invention more obvious and understandable, preferred embodiments are described in detail below with reference to the accompanying drawings.

### Brief Description of the Drawings

Fig. 1 is a schematic diagram of a lifting system for battery swapping of a vehicle provided in an embodiment of the invention.
Fig. 2 is an exploded view of a lifting system for battery swapping of a vehicle provided in an embodiment of the invention.
Fig. 3 is a schematic diagram of a positioning platform provided in an embodiment of the invention.
Fig. 4 is a schematic diagram of a lift executing mechanism and a lifting support platform provided in an embodiment of the invention.
Fig. 5 is a schematic diagram of a transmission belt in a clockwise rotation provided in an embodiment of the invention.
Fig. 6 is a schematic diagram of a transmission belt in a counterclockwise rotation provided in an embodiment of the invention.
Fig. 7 is a schematic diagram of a photographing and positioning mechanism provided in an embodiment of the invention.
Fig. 8 is a schematic diagram of the arrangement of a fine adjustment unit provided in an embodiment of the invention.
Fig. 9 is a sectional view of Fig. 8 taken along section line A-A.

### [Description of Symbols]

| | | | |
|---|---|---|---|
| 1: | Positioning platform | 2: | Lift executing mechanism |
| 3: | Lifting support platform | 11: | Platform body |
| 12: | Ramp structure | 13: | Guide structure |
| 14: | Positioning structure | 15: | Guide rail |
| 16: | Guide bar | 17: | X-direction positioning unit |
| 18: | Y-direction positioning unit | 21: | Main body frame |
| 22: | Synchronous lifting mechanism | 31: | Lifting frame |
| 32: | Support structure | | |

### Detailed Description of Embodiments

In order to further illustrate the technical means used to achieve the intended purpose of the invention and the technical effects of the invention, the implementation of a lifting system for battery swapping of a vehicle proposed in the invention and the effects thereof are described in detail hereinafter in conjunction with the accompanying drawings and the preferred embodiments.

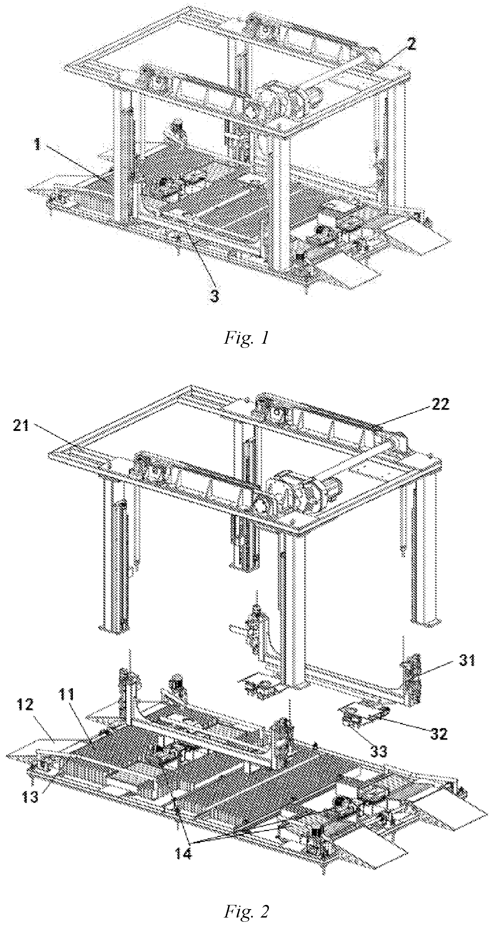

As shown in Figs. 1 and 2, the invention provides a lifting system for battery swapping of a vehicle. The lifting system comprises: a positioning platform 1, a lift executing mechanism 2, and a lifting support platform 3, wherein the positioning platform 1 is used to support a vehicle, and the positioning platform 1 comprises a positioning structure 14 for defining a stop position of the vehicle and for positioning and adjusting front and rear wheels of the vehicle to adjust the vehicle to a first preset position; and the first preset position refers to the corresponding battery swap position when the vehicle is located on the positioning platform 1. The lift executing mechanism 2 is disposed on the positioning platform 1, the lifting support platform 3 is connected to the lift executing mechanism, and the lift executing mechanism 2 drives the lifting support platform 3 to move in a vertical direction; and the lifting support platform 3 is used to lift the vehicle on the positioning platform 1 so that the vehicle leaves the positioning mechanism 14 and is lifted to a preset battery swap position where battery swapping of the vehicle can be implemented.

The vehicle of the invention generally refers to a vehicle having a swappable battery pack and is not limited to only a battery electric vehicle, and may also be a hybrid vehicle.

Each of the components of the lifting system for battery swapping of a vehicle is described in detail as follows:

### (I) Battery Swap Platform

As shown in Fig. 2, the positioning platform 1 comprises a platform body 11 for supporting a vehicle, a ramp structure 12 for guiding the vehicle to enter and exit the platform body 11, and a guide structure 13 for guiding the vehicle when it enters the platform body 11.

The platform body 11 is used to support the vehicle, allowing the vehicle to travel to a battery swap position. The gap between the components of the platform body 11 may be filled with a fiber-reinforced plastic grille, which not only ensures the smooth entry of the vehicle into the positioning platform 1, but also reduces the weight of the positioning platform 1.

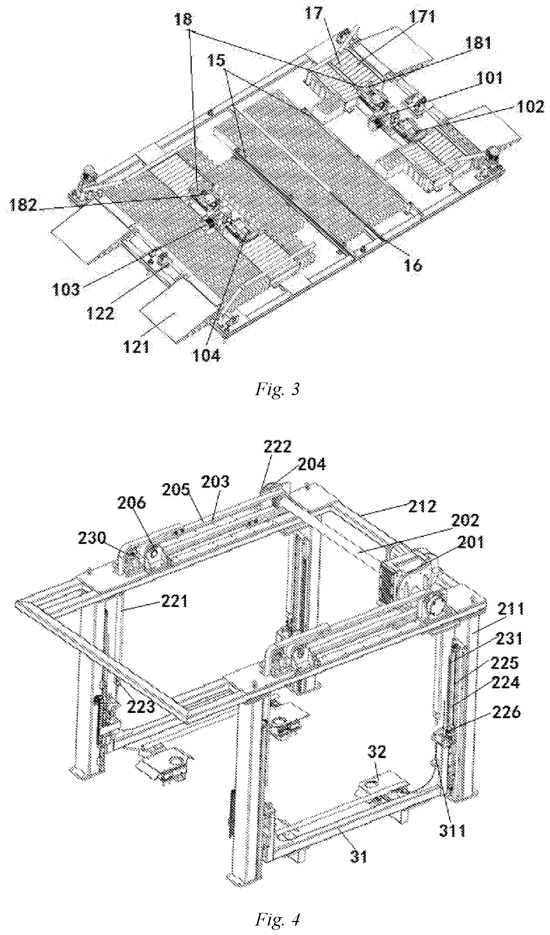

In the example shown in Fig. 3, the ramp structure 12 is provided at either end of the platform body 11 in the travelling direction, or may be provided at only one end thereof. The ramp structure 12 comprises a ramp body 121 and a spindle 122. The ramp body 121 is connected to the platform body 11 via the spindle 122 and is turned around the spindle 122 such that the ramp structure 12 is folded or deployed. When the vehicle enters and exits the positioning platform 1, the ramp structure 12 is deployed; whereas in other cases, the ramp structure 12 can be folded to reduce the area occupied by the battery swap system.

The guide structure 13 corresponds to the ramp structure 12, is disposed on the platform body 11, and extends to the ramp structure 12. Specifically, the guide structure 13 comprises guide members arranged in pairs respectively at two ends of the platform body 11 in the vehicle width direction, and the space between the guide members at both ends is defined as an area that allows passage of the vehicle, thereby preventing the vehicle, during entering and exiting the platform body 11, from deviating from the trajectory and from falling off the platform body 11. As an example, the guide structure 13 consists of guide rods, and the extension direction of the guide rods is substantially parallel to the travelling direction. During the entry of a vehicle, the ramp structure 12 and the guide structure 13 can together be used as a reference for guiding the vehicle to enter the positioning platform 1 in a forward direction, enabling the stop position to be closer to an ideal position.

After the vehicle enters the platform body 11, the front and rear wheels of the vehicle will be positioned and adjusted through the positioning structure 14, so as to adjust the vehicle to the first preset position.

As shown in Fig. 3, the positioning platform 1 further comprises a guide rail 15 and a rack 16. The guide rail 15 and the rack 16 are embedded in the platform body 11 and are in the same plane as the positioning platform 1, so as to ensure rolling stability and high control precision of the vehicle, which can reduce the time for battery swapping. The guide rail 15 and rack 16 are both located in a region of the positioning platform 1 corresponding to a battery pack in a vehicle chassis when the battery swapping of the vehicle is implemented, wherein the guide rail 15 is used to provide a travelling track for the battery swap trolley to enter or exit the positioning platform 1, and determine a travelling direction of the battery swap trolley; and the rack 16 is used to mesh with a gear on the battery swap trolley to control the moving distance of the battery swap trolley. The movement direction and distance accuracy of the battery swap trolley is increased by arranging the guide rail 15 and the rack 16, thereby increasing the accuracy and efficiency of battery swapping.

In some embodiments, both the guide rail 15 and the rack 16 are parallel to a Y-direction, the positioning platform 1 comprises two guide rails 15, and the rack 16 is disposed between the two guide rails 15.

In the example shown in Fig. 3, the travelling direction is the X-direction and the vehicle width direction is the Y-direction. The positioning structure 14 comprises an X-direction positioning unit 17 for adjusting the position of the vehicle in the X-direction and a Y-direction positioning unit 18 for adjusting the position of the vehicle in the Y-direction.

The X-direction positioning unit 17 comprises grooves 171 for supporting wheels, which may be the front wheels or the rear wheels. The incoming vehicle is determined to be in the stop position in the X-direction when the wheels enter the grooves 171. A description will be given with the X-direction positioning unit 17 being used for supporting the front wheels of the vehicle. The Y-direction positioning unit 18 comprises a front-wheel Y-direction positioning unit 181 and a rear-wheel Y-direction positioning unit 182 respectively disposed at positions corresponding to the front wheels and the rear wheels of the vehicle. The front-wheel Y-direction positioning unit 181 comprises a front-wheel push rod motor 101 and front-wheel push rods 102 provided at two ends of the front-wheel push rod motor 101 in the Y-direction; the front-wheel push rod motor 101 is used to drive the front-wheel push rods 102 to move; and the front-wheel push rods 102 are used to push the front wheels to move, so as to position the front wheels in the Y-direction. The rear-wheel Y-direction positioning unit 182 comprises a rear-wheel push rod motor 103 and rear-wheel push rods 104 disposed at two ends of the rear-wheel push rod motor 103 in the Y-direction; the rear-wheel push rod motor 103 is used to drive the rear-wheel push rods 104 to move; and the rear-wheel push rods 104 are used to push the rear wheels to move, so as to position the rear wheels in the Y-direction.

The positioning platform 1 further comprises a control module (not shown in the figures). The control module comprises: a ramp structure control unit for controlling the ramp structure into a folded state or a deployed state; an electric motor control unit for controlling the operating states of the front-wheel push rod motor and the rear-wheel push rod motor; and a battery swap trolley control unit for controlling an entry position of the battery swap trolley.

### (II) Lift Executing Mechanism

As shown in Fig. 2, the lift executing mechanism 2 comprises a main body frame 21 and a synchronous lifting mechanism 22, wherein the structure of the main body frame 21 comprises a plurality of column structures 211 and cross beams 212. The plurality of column structures 211 are connected via the plurality of cross beams 212. The plurality of column structures 211 are disposed at two ends of the positioning platform 1 in the vehicle width direction. One end of the main body frame 21 in the vertical direction is provided with the positioning platform 1, and the other end thereof is provided with the synchronous lifting mechanism 22. In some embodiments, the frame structure 21 comprises four column structures 211 evenly distributed at four corners of the positioning platform 21 in the circumferential direction.

As shown in Fig. 4, the synchronous lifting mechanism 22 comprises lifting belts 221 and a driving portion 222. The lifting belt 221 may be of a belt-like structure or a chain-like structure, such as a belt and a chain. Each of the lifting belts 221 is provided at the respective column structure 211, one end of the lifting belt 221 is connected to the driving portion 222, and the other end thereof is provided as a free end 223. The free end 223 is connected to the lifting support platform 3. The column structure 221 may also be provided with a guide portion 224 for guiding the lifting support platform 3 to move up and down in the direction of the column structure 221 so as to prevent the deviation of the direction and to make the lifting process more stable with less noise, and to adapt to the external environment better. The guide portion 224 may comprise a slide rail 225 and a slider 226. The slide rail 225 is disposed on the column structure 221 and extends in a longitudinal direction of the column structure 221. The slider 226 is disposed on the slide rail 225 and connected to the lifting support platform 3. The slider 226 moves along the slide rail 225 in the process of the lifting support platform 3 moving along the column structure 221.

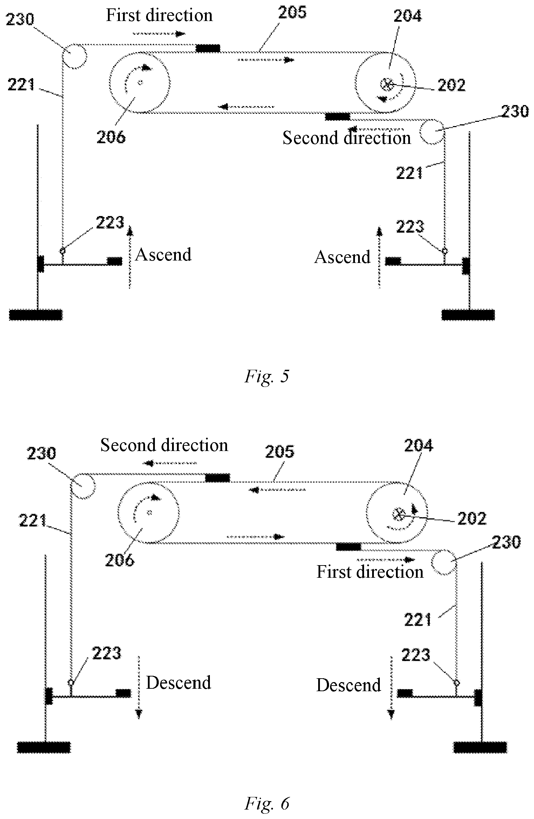

In the example shown in Fig. 4, the driving portion 222 comprises an electric motor 201, a transmission shaft 202, and an endless transmission belt 203. The endless transmission belt 203 may be a belt-like structure or a chain-like structure such as a belt and a chain. The electric motor 201 is connected to the transmission shaft 202 for driving the transmission shaft 202 to rotate; the transmission shaft 202 is connected to the endless transmission belt 203 for driving the endless transmission belt 203 to rotate; and the endless transmission belt 203 is connected to one end of the lifting belt 221 for driving the free end 223 of the lifting belt 221 to ascend or descend along the column structure 211. The endless transmission belt 203 comprises a driving wheel 204, a transmission belt 205 and a driven wheel 206, wherein the driving wheel 204 is connected to the transmission shaft 202 and rotates along with the rotation of the transmission shaft 202; the transmission belt 205 connects the driving wheel 204 and the driven wheel 206 to form a ring-shaped structure, and the transmission belt 205 rotates clockwise or counterclockwise along with the rotation of the driving wheel 204 and drives the driven wheel 206 to rotate; and the transmission belt 205 comprises a first transmission section 207 and a second transmission section 208 which are respectively located between the driving wheel 204 and the driven wheel 206, and the first transmission section 207 and the second transmission section 208 are respectively connected to one of the lifting belts 221, as shown in Figs 5 and 6.

A deflection wheel 230 is disposed between two ends of the lifting belt 22, and the lifting belt 221 wraps around the deflection wheel 230, with one end connected to the lifting support platform 3, and the other end connected to the first transmission section 207 or the second transmission section 208 of the transmission belt 205.

In the example shown in Fig. 5, the transmission belt 205 rotates clockwise, the first transmission section 207 moves in a first direction and the second transmission section 208 moves in a second direction, driving the free end 223 of the lifting belt 221 to ascend along the column structure 211, thereby driving the lifting support platform 3 to ascend. During battery swapping, the vehicle is placed on the lifting support platform 3, and the vehicle is raised along with the lifting support platform 3.

In the example shown in Fig. 6, the transmission belt 205 rotates counterclockwise, the first transmission section 207 moves in the second direction and the second transmission section 208 moves in the first direction, driving the free end 223 of the lifting belt 221 to descend along the column structure 211, thereby driving the lifting support platform 3 to descend. During the battery swapping, the vehicle is placed on the lifting support platform 3, and the vehicle descends along with the lifting support platform 3.

In some embodiments, the lift executing mechanism further comprises a fall prevention portion 231 disposed on the column structure 221 for preventing the lifting support platform 3 from falling down, so as to ensure safety and reliability. The fall prevention portion 231 may be a ratchet mechanism.

### (III) Lifting Support Platform

As shown in Fig. 4, the lifting support platform 3 comprises a lifting frame 31 and a support structure 32, wherein the lifting frame 31 is connected to the free end 223 of the lifting belt 221; and the support structure 32 is disposed on the lifting frame 31 for supporting a vehicle lift point. A description will be given below, still taking the lift executing mechanism 2 comprising four column structures 211 evenly arranged on the positioning platform 1 as an example. The lifting frame 31 may be provided with four lifting arms 311 in one-to-one correspondence with the four column structures 221. The lifting arms 311 are connected to the lifting belts 221 and the sliders 224. In an initial position, the lifting arms 311 are in contact with the positioning platform 1, so that the support structure 32 is flush with a surface of the positioning platform 1, and while the vehicle is entering the positioning platform 1, the vehicle wheels run over the support structure 32. There may also be four support structures evenly distributed on the lifting frame 31, for supporting four lift points of the vehicle respectively.

In some embodiments, after the vehicle is coarsely positioned by the positioning platform 1, the lifting support platform 3 lifts the vehicle to a first preset height, which is the height of the vehicle, when in place for battery swapping, from the positioning platform 1. At this time, the position of the vehicle in the horizontal plane may be deviated from the accurate first preset position to some extent. Therefore, a photographing and positioning mechanism 33 may be provided to further adjust the position of the vehicle, so as to increase the accuracy and efficiency of battery swapping. Specifically, the photographing and positioning mechanism 33 is disposed on the support structure 32. The photographing and positioning mechanism 33 is used for photographing and positioning the vehicle and the battery swap trolley after the vehicle finishes positioning on the positioning platform 1 and is lifted to the first preset height by the lifting support platform 3 and the battery swap trolley enters an area under the vehicle. The battery swap trolley is provided with a positioning pin for cooperating with a positioning hole of the vehicle body so as to align the battery swap trolley with the battery swap position.

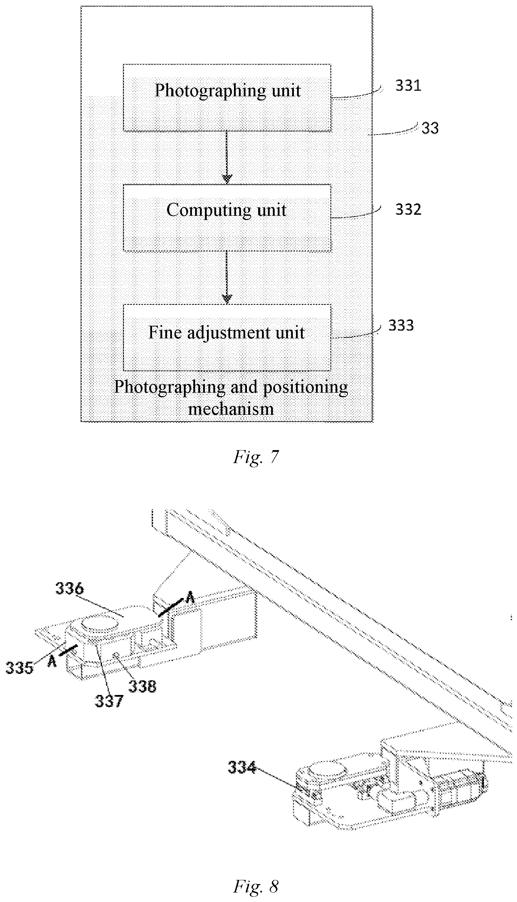

In the example shown in Fig. 7, the photographing and positioning mechanism 33 comprises a photographing unit 331, a computing unit 332, and a fine adjustment unit 333, wherein the photographing unit 331 is used to photograph the positioning hole of the vehicle body and the positioning pin of the battery swap trolley to obtain photographic data, and the photographing unit 331 may be a camera; the computing unit 332 is used to compute a current vehicle position deviation according to the photographic data; and the fine adjustment unit 333 is used to adjust the support structure 32 according to the obtained vehicle position deviation so as to adjust the position of the vehicle.

As shown in Fig. 8, there are a plurality of support structures 32 for supporting different support points of the vehicle respectively, and the fine adjustment unit 333 comprises a driving portion 334 and a floating portion 335 which are provided on different support structures 32 and are arranged in a travelling direction. The driving portion 334 drives the corresponding support structure 32 to move in the travelling direction, to move the corresponding vehicle lift point, so as to drive the vehicle to move. The floating portion 335 is configured to float with the movement of the vehicle so as to adjust the position of the vehicle, and the fine adjustment unit 333 comprises at least one driving portion 334. Other portions thereof in contact with the vehicle are all provided as floating portions 334 that float with the movement of the vehicle.

The floating portion 335 comprises: a floating unit 336, a support unit 337 and a restoring unit 338. The floating unit 336 is supported on the support unit 337 via universal balls 339 and is able to float in a horizontal plane relative to the support unit 337. The restoring unit 338 is connected to the floating unit 336 for restoring the floating unit 336.

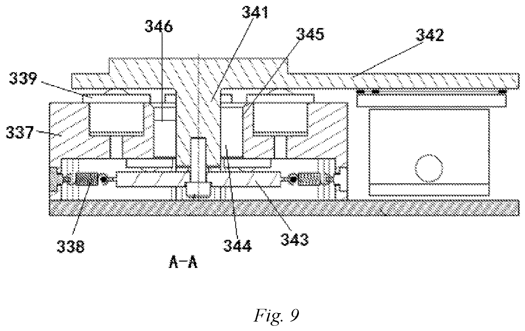

As shown in Fig. 9, the floating unit 336 comprises: a connecting 337 post 341, and a first floating plate 342 and a second floating plate 343 which are respectively connected to two ends of the connecting post 341 and are parallel to each other. The support unit 337 is provided with a through hole 344 for the connecting post 341 to pass through, the first floating plate 342 and the second floating plate 343 are respectively located outside the through hole 344 and are in rolling contact with the support unit 337 via the universal balls 339, and a floating gap 346 is provided between the connecting post 341 and a through-hole wall 345. At least one of the first floating plate 342 and the second floating plate 343 is provided with the restoring unit 338.

The invention further comprises a battery swap system, comprising the lifting system of the invention and a battery swap trolley.

Based on the aforementioned battery swap system, the following steps are performed for a battery swap.

In Step 1, before the vehicle enters, the ramp structure 12 is controlled such that same deploys automatically.

In Step 2, when the vehicle enters, the travelling direction is determined according to the positions of the ramp structure 12 and the guide structure 13, and the vehicle is controlled such that same enters the positioning platform.

In Step 3, the front and rear wheels of the vehicle are positioned and adjusted by means of the positioning structure 14, to adjust the vehicle to the first preset position, at which time the vehicle is placed on the lifting support platform 3.

In Step 4, the lift executing mechanism 2 lifts the vehicle to the preset height by hoisting the lifting support platform 3.

In Step 5, the battery swap trolley is controlled such that same enters the battery swap position, the photographing and positioning mechanism 33 adjusts the positioning of the vehicle, and then the battery swap trolley swaps the battery pack for the vehicle.

In Step 6, after the battery swapping is completed, the lift executing mechanism 2 lowers the vehicle to the positioning platform 1 by lowering the lifting support platform 3, the vehicle exits the positioning platform 1, and the ramp structure 12 is controlled such that same is folded, completing the battery swapping.

The embodiments of the invention provide a lifting system for battery swapping of a vehicle, a battery swap system and a battery swap method. The positioning platform 1 has a simple structure, can achieve quick and accurate positioning, and can precisely adjust the position of the vehicle to locate the vehicle in the preset battery swap position, saving on the time for battery swapping, and increasing the accuracy and efficiency of battery swapping. The positioning platform 1 can also precisely position the battery swap trolley, so that the battery swap trolley can enter the positioning platform smoothly and accurately, thereby increasing the accuracy and efficiency of battery swapping. In addition, the ramp structure 12 can be in a folded state or a deployed state, reducing the space occupied by the positioning platform 1. The gap portion between the components of the positioning platform 1 is filled with a fiber-reinforced plastic grille, which not only ensures the smooth entry of the vehicle into the positioning platform 1, but also reduces the weight of the positioning platform 1. The lift executing mechanism 2 realizes synchronous lifting, and can ensure smooth ascending and descending processes of a vehicle. The photographing and positioning unit 33 of the lifting support platform 3 can also adjust the position of the vehicle to further improve the battery swapping precision. The components of the lifting system can be separately used, thus achieving modularization, easy installation, convenient use and low costs. The invention can meet various requirements of users, save time for the users and improve the user experience.

## Claims

1. A lifting system for battery swapping of a vehicle, wherein the lifting system comprises:
a positioning platform (1), a lift executing mechanism (2) and a lifting support platform (3),
wherein
the positioning platform (1) is used to support a vehicle, and the positioning platform (1) comprises a positioning structure (14) for defining a stop position for the vehicle and for positioning and adjusting front and rear wheels of the vehicle so as to adjust the vehicle to a first preset position;
the lift executing mechanism (2) is disposed on the positioning platform (1), the lifting support platform (3) is connected to the lift executing mechanism (2), and the lift executing mechanism (2) is used to drive the lifting support platform (3) to move in a vertical direction; and
the lifting support platform (3) is used to lift the vehicle on the positioning platform (1) so that the vehicle leaves the positioning structure (14) and is lifted to a preset battery swap position,
**characterized in that**
the lift executing mechanism (2) comprises a main body frame (21) and a synchronous lifting mechanism (22), wherein the structure of the main body frame (21) comprises a plurality of column structures (211) disposed at two ends of the positioning platform (1) in the vehicle width direction, one end of the main body frame (21) in the vertical direction is provided with the positioning platform (1), and the other end thereof in the vertical direction is provided with the synchronous lifting mechanism (22),
wherein the synchronous lifting mechanism (22) comprises lifting belts (221) and a driving portion (222), each of the lifting belts (221) is provided at the respective column structure (211), one end of the lifting belt (221) is connected to the driving portion (222) and the other end thereof is provided as a free end (223), and the free end (223) is connected to the lifting support platform (3),
wherein the driving portion (222) comprises an electric motor (201), a transmission shaft (202) and an endless transmission belt (203), wherein:
the electric motor (201) is connected to the transmission shaft (202) for driving the transmission shaft (202) to rotate;
the transmission shaft (202) is connected to the endless transmission belt (203) for driving the endless transmission belt (203) to rotate; and
the endless transmission belt (203) is connected to one end of the lifting belt (221) for driving the free end (223) of the lifting belt (221) to ascend or descend along the column structure (211);
the endless transmission belt (203) comprises a driving wheel (204), a transmission belt (205) and a driven wheel (206), wherein
the driving wheel (204) is connected to the transmission shaft (202) and rotates along with the rotation of the transmission shaft (202);
the transmission belt (205) connects the driving wheel (204) and the driven wheel (206) to form a ring-shaped structure, and the transmission belt (205) rotates clockwise or counterclockwise along with the rotation of the driving wheel (204) and drives the driven wheel (206) to rotate; and
the transmission belt (205) comprises a first transmission section (207) and a second transmission section (208) which are respectively located between the driving wheel (204) and the driven wheel (206), and the first transmission section (207) and the second transmission section (208) are respectively connected to one of the lifting belts (221),
wherein a deflection wheel (230) (204) is disposed between two ends of the lifting belt (221), and the lifting belt (221) wraps around the deflection wheel (230), with one end connected to the lifting support platform (3) and the other end connected to the first transmission section (207) or the second transmission section (208), and
wherein, when the transmission belt (205) rotates clockwise, the first transmission section (207) moves in a first direction and the second transmission section (208) moves in a second direction, driving the free end (223) of the lifting belt (221) to ascend along the column structure (211), thereby driving the lifting support platform (3) to ascend, and wherein, when the transmission belt (205) rotates counterclockwise, the first transmission section (207) moves in the second direction and the second transmission section (208) moves in the first direction, thereby driving the lifting support platform (3) to descend.

2. The lifting system for battery swapping of a vehicle according to claim 1, **characterized in that**
provided that a travelling direction is an X-direction and a vehicle width direction is a Y-direction, the positioning platform (1) further comprises:
a platform body (11) for supporting the vehicle;
a ramp structure (12) disposed at at least one end, in the X-direction, of the platform body (11); and
a guide structure (13) disposed at two ends, in the Y-direction, of the platform body (11).

3. The lifting system for battery swapping of a vehicle according to claim 1, **characterized in that**
the positioning structure (14) comprises an X-direction positioning unit (17) and a Y-direction positioning unit (18), wherein
the X-direction positioning unit (17) is used to determine the stop position in the X-direction for an incoming vehicle; and
the Y-direction positioning unit (18) is used for adjusting the positions of front wheels and of rear wheels in the Y-direction so as to perform positioning in the Y-direction.

4. The lifting system for battery swapping of a vehicle according to claim 2, **characterized in that**
the positioning platform (1) further comprises a guide rail (15) and a rack (16), the guide rail (15) and the rack (16) being embedded in the positioning platform (1), wherein the guide rail (15) is used to provide a travelling track for a battery swap trolley to enter or exit the positioning platform (1) and determine a travelling direction of the battery swap trolley; and
the rack (16) is used to mesh with a gear on the battery swap trolley to control the moving distance of the battery swap trolley.

5. The lifting system for battery swapping of a vehicle according to any one of claims 1-4, **characterized in that**
the lift executing mechanism (2) further comprises a fall prevention portion (231), which is provided on the column structure (211), for supporting the lifting support platform (3) in case of breakage or failure of the lifting belt (221), so as to prevent the lifting support platform (3) from falling.

6. The lifting system for battery swapping of a vehicle according to any one of claims 1-5, **characterized in that**
the lifting support platform (3) comprises a lifting frame (31) and a support structure (32), wherein
the lifting frame (31) is connected to the free end (223) of the lifting belt (221); and
the support structure (32) is disposed on the lifting frame (31) for supporting a vehicle lift point.

7. The lifting system for battery swapping of a vehicle according to claim 6, **characterized in that**
the support structure (32) is provided with a photographing and positioning mechanism (33) for photographing and positioning the vehicle and the battery swap trolley after the vehicle is lifted to a first preset height and the battery swap trolley enters an area under the vehicle.

8. The lifting system for battery swapping of a vehicle according to claim 7, **characterized in that**
the photographing and positioning mechanism (33) comprises:
a photographing unit (331) for photographing a positioning hole of a vehicle body and a positioning pin of the battery swap trolley to obtain photographic data;
a computing unit (332) for computing a current vehicle position deviation according to the photographic data; and
a fine adjustment unit (333) provided in the support structure (32), for adjusting the position of the vehicle according to the obtained vehicle position deviation.

9. The lifting system for battery swapping of a vehicle according to claim 8, **characterized in that**
there are a plurality of support structures (32) for supporting different support points of the vehicle respectively, and the fine adjustment unit (333) comprises a driving portion (334) and a floating portion (335) which are provided on different support structures (32) and are arranged in a travelling direction; the driving portion (334) drives the corresponding support structure (32) to move in the travelling direction so as to drive the vehicle to move; and the floating portion (335) is configured to float with the movement of the vehicle so as to adjust the position of the vehicle.

10. The lifting system for battery swapping of a vehicle according to claim 9, **characterized in that**
the floating portion (335) comprises:
a floating unit (336), a support unit (337) and a restoring unit (338), wherein
the floating unit (336) is supported on the support unit (337) via universal balls (339) and is able to float in a horizontal plane relative to the support unit (337); and
the restoring unit (338) is connected to the floating unit (336) for restoring the floating unit (336).

11. A battery swap system, **characterized by** comprising a lifting system as claimed in any one of claims 1-10.

## Patentansprüche

1. Hubsystem für einen Batteriewechsel eines Fahrzeugs, wobei das Hubsystem Folgendes umfasst:
eine Positionierungsplattform (1), einen Hubausführungsmechanismus (2) und eine Hubstützplattform (3),
wobei
die Positionierungsplattform (1) verwendet wird, um ein Fahrzeug zu stützen, und die Positionierungsplattform (1) eine Positionierungsstruktur (14) zum Definieren einer Stoppposition für das Fahrzeug und zum Positionieren und Einstellen von Vorder- und Hinterrädern des Fahrzeugs umfasst, um das Fahrzeug auf eine erste voreingestellte Position einzustellen;
der Hubausführungsmechanismus (2) auf der Positionierungsplattform (1) angeordnet ist, die Hubstützplattform (3) mit dem Hubausführungsmechanismus (2) verbunden ist und der Hubausführungsmechanismus (2) verwendet wird, um die Hubstützplattform (3) in eine Bewegung in einer vertikalen Richtung anzutreiben; und
die Hubstützplattform (3) verwendet wird, um das Fahrzeug auf der Positionierungsplattform (1) derart anzuheben, dass das Fahrzeug die Positionierungsstruktur (14) verlässt und auf eine voreingestellte Batteriewechselposition angehoben wird,
**dadurch gekennzeichnet, dass**
der Hubausführungsmechanismus (2) einen Hauptkörperrahmen (21) und einen synchronen Hubmechanismus (22) umfasst, wobei die Struktur des Hauptkörperrahmens (21) eine Mehrzahl von Säulenstrukturen (211) umfasst, die an zwei Enden der Positionierungsplattform (1) in der Fahrzeugbreitenrichtung angeordnet sind, wobei ein Ende des Hauptkörperrahmens (21) in der vertikalen Richtung mit der Positionierungsplattform (1) versehen ist und das andere Ende davon in der vertikalen Richtung mit dem synchronen Hubmechanismus (22) versehen ist,
wobei der synchrone Hubmechanismus (22) Hubriemen (221) und einen Antriebsabschnitt (222) umfasst, jeder der Hubriemen (221) an der jeweiligen Säulenstruktur (211) bereitgestellt ist, ein Ende des Hubriemens (221) mit dem Antriebsabschnitt (222) verbunden ist und das andere Ende davon als ein freies Ende (223) bereitgestellt ist und das freie Ende (223) mit der Hubstützplattform (3) verbunden ist,
wobei der Antriebsabschnitt (222) einen Elektromotor (201), eine Transmissionswelle (202) und einen Endlostransmissionsriemen (203) umfasst, wobei:
der Elektromotor (201) mit der Transmissionswelle (202) zum Antreiben der Transmissionswelle (202) in eine Drehung verbunden ist;
die Transmissionswelle (202) mit dem Endlostransmissionsriemen (203) zum Antreiben des Endlostransmissionsriemens (203) in eine Drehung verbunden ist; und
der Endlostransmissionsriemen (203) mit einem Ende des Hubriemens (221) zum Antreiben des freien Endes (223) des Hubriemens (221) in eine Aufwärts- oder Abwärtsbewegung entlang der Säulenstruktur (211) verbunden ist;
der Endlostransmissionsriemen (203) ein Antriebsrad (204), einen Transmissionsriemen (205) und ein angetriebenes Rad (206) umfasst, wobei
das Antriebsrad (204) mit der Transmissionswelle (202) verbunden ist und sich gemeinsam mit der Drehung der Transmissionswelle (202) dreht;
der Transmissionsriemen (205) das Antriebsrad (204) und das angetriebene Rad (206) derart verbindet, dass eine ringförmige Struktur gebildet wird, und sich der Transmissionsriemen (205) im Uhrzeigersinn oder gegen den Uhrzeigersinn gemeinsam mit der Drehung des Antriebsrads (204) dreht und das angetriebene Rad (206) in eine Drehung antreibt; und
der Transmissionsriemen (205) einen ersten Transmissionsbereich (207) und einen zweiten Transmissionsbereich (208) umfasst, die sich jeweils zwischen dem Antriebsrad (204) und dem angetriebenen Rad (206) befinden, und wobei der erste Transmissionsbereich (207) und der zweite Transmissionsbereich (208) jeweils mit einem der Hubriemen (221) verbunden sind,
wobei ein Umlenkrad (230) zwischen zwei Enden des Hubriemens (221) angeordnet ist und sich der Hubriemen (221) um das Umlenkrad (230) wickelt, wobei ein Ende mit der Hubstützplattform (3) verbunden ist und das andere Ende mit dem ersten Transmissionsbereich (207) oder dem zweiten Transmissionsbereich (208) verbunden ist, und
wobei, wenn sich der Transmissionsriemen (205) im Uhrzeigersinn dreht, sich der erste Transmissionsbereich (207) in einer ersten Richtung bewegt und sich der zweite Transmissionsbereich (208) in einer zweiten Richtung bewegt, wobei das freie Ende (223) des Hubriemens (221) in eine Aufwärtsbewegung entlang der Säulenstruktur (211) angetrieben wird, wodurch die Hubstützplattform (3) in eine Aufwärtsbewegung angetrieben wird, und wobei, wenn sich der Transmissionsriemen (205) gegen den Uhrzeigersinn dreht, sich der erste Transmissionsbereich (207) in der zweiten Richtung bewegt und sich der zweite Transmissionsbereich (208) in der ersten Richtung bewegt, wodurch die Hubstützplattform (3) in eine Abwärtsbewegung angetrieben wird.

2. Hubsystem für einen Batteriewechsel eines Fahrzeugs nach Anspruch 1, **dadurch gekennzeichnet, dass**,
vorausgesetzt, dass eine Fahrtrichtung eine X-Richtung ist und eine Fahrzeugbreitenrichtung eine Y-Richtung ist, die Positionierungsplattform (1) ferner Folgendes umfasst:
einen Plattformkörper (11) zum Stützen des Fahrzeugs;
eine Rampenstruktur (12), die an mindestens einem Ende in der X-Richtung des Plattformkörpers (11) angeordnet ist; und
eine Führungsstruktur (13), die an zwei Enden in der Y-Richtung des Plattformkörpers (11) angeordnet ist.

3. Hubsystem für einen Batteriewechsel eines Fahrzeugs nach Anspruch 1, **dadurch gekennzeichnet, dass**
die Positionierungsstruktur (14) eine Positionierungseinheit (17) in X-Richtung und eine Positionierungseinheit (18) in Y-Richtung umfasst, wobei
die Positionierungseinheit (17) in X-Richtung verwendet wird, um die Stoppposition in der X-Richtung für ein ankommendes Fahrzeug zu bestimmen; und
die Positionierungseinheit (18) in Y-Richtung zum Einstellen der Positionen von Vorderrädern und von Hinterrädern in der Y-Richtung verwendet wird, um ein Positionieren in der Y-Richtung durchzuführen.

4. Hubsystem für einen Batteriewechsel eines Fahrzeugs nach Anspruch 2, **dadurch gekennzeichnet, dass**
die Positionierungsplattform (1) ferner eine Führungsschiene (15) und eine Zahnstange (16) umfasst, wobei die Führungsschiene (15) und die Zahnstange (16) in die Positionierungsplattform (1) eingebettet sind, wobei die Führungsschiene (15) verwendet wird, um eine Fahrspur bereitzustellen, in der ein Batteriewechselwagen in die Positionierungsplattform (1) einfahren oder aus dieser ausfahren kann, und um eine Fahrtrichtung des Batteriewechselwagens zu bestimmen; und
die Zahnstange (16) verwendet wird, um mit einem Zahnrad auf dem Batteriewechselwagen einzugreifen, um die Bewegungsdistanz des Batteriewechselwagens zu steuern.

5. Hubsystem für einen Batteriewechsel eines Fahrzeugs nach einem der Ansprüche 1-4, **dadurch gekennzeichnet, dass**
der Hubausführungsmechanismus (2) ferner einen Fallverhinderungsabschnitt (231) umfasst, der auf der Säulenstruktur (211) zum Stützen der Hubstützplattform (3) im Fall eines Bruchs oder Versagens des Hubriemens (221) bereitgestellt ist, um ein Fallen der Hubstützplattform (3) zu verhindern.

6. Hubsystem für einen Batteriewechsel eines Fahrzeugs nach einem der Ansprüche 1-5, **dadurch gekennzeichnet, dass**
die Hubstützplattform (3) einen Hubrahmen (31) und eine Stützstruktur (32) umfasst, wobei
der Hubrahmen (31) mit dem freien Ende (223) des Hubriemens (221) verbunden ist; und
die Stützstruktur (32) auf dem Hubrahmen (31) zum Stützen eines Fahrzeughubpunkts angeordnet ist.

7. Hubsystem für einen Batteriewechsel eines Fahrzeugs nach Anspruch 6, **dadurch gekennzeichnet, dass**
die Stützstruktur (32) mit einem Fotografier- und Positionierungsmechanismus (33) zum Fotografieren und Positionieren des Fahrzeugs und des Batteriewechselwagens, nachdem das Fahrzeug auf eine erste voreingestellte Höhe angehoben ist und der Batteriewechselwagen in einen Bereich unter dem Fahrzeug einfährt, versehen ist.

8. Hubsystem für einen Batteriewechsel eines Fahrzeugs nach Anspruch 7, **dadurch gekennzeichnet, dass**
der Fotografier- und Positionierungsmechanismus (33) Folgendes umfasst:
eine Fotografiereinheit (331) zum Fotografieren eines Positionierungslochs einer Fahrzeugkarosserie und eines Positionierungsstifts des Batteriewechselwagens, um fotografische Daten zu erhalten;
eine Recheneinheit (332) zum Berechnen einer aktuellen Fahrzeugpositionsabweichung gemäß den fotografischen Daten; und
eine in der Stützstruktur (32) bereitgestellte Feineinstellungseinheit (333) zum Einstellen der Position des Fahrzeugs gemäß der erhaltenen Fahrzeugpositionsabweichung.

9. Hubsystem für einen Batteriewechsel eines Fahrzeugs nach Anspruch 8, **dadurch gekennzeichnet, dass**
eine Mehrzahl von Stützstrukturen (32) zum Stützen jeweils unterschiedlicher Stützpunkte des Fahrzeugs vorhanden sind und die Feineinstellungseinheit (333) einen Antriebsabschnitt (334) und einen schwimmenden Abschnitt (335) umfasst, die auf unterschiedlichen Stützstrukturen (32) bereitgestellt sind und in einer Fahrtrichtung angeordnet sind; wobei der Antriebsabschnitt (334) die entsprechende Stützstruktur (32) in eine Bewegung in der Fahrtrichtung antreibt, um das Fahrzeug in eine Bewegung anzutreiben; und wobei der schwimmende Abschnitt (335) dazu ausgelegt ist, mit der Bewegung des Fahrzeugs zu schwimmen, um die Position des Fahrzeugs einzustellen.

10. Hubsystem für einen Batteriewechsel eines Fahrzeugs nach Anspruch 9, **dadurch gekennzeichnet, dass**
der schwimmende Abschnitt (335) Folgendes umfasst:
eine schwimmende Einheit (336), eine Stützeinheit (337) und eine Rückstelleinheit (338), wobei
die schwimmende Einheit (336) auf der Stützeinheit (337) über universelle Kugeln (339) gestützt ist und in einer horizontalen Ebene relativ zu der Stützeinheit (337) schwimmen kann; und
die Rückstelleinheit (338) mit der schwimmenden Einheit (336) zum Rückstellen der schwimmenden Einheit (336) verbunden ist.

11. Batteriewechselsystem, **dadurch gekennzeichnet, dass** es ein Hubsystem nach einem der Ansprüche 1-10 umfasst.

## Revendications

1. Système de levage pour échange de batterie d'un véhicule, dans lequel le système de levage comprend :
une plate-forme de positionnement (1), un mécanisme d'exécution de levage (2) et une plate-forme de support de levage (3),
dans lequel
la plate-forme de positionnement (1) est utilisée pour supporter un véhicule, et la plate-forme de positionnement (1) comprend une structure de positionnement (14) pour définir une position d'arrêt pour le véhicule et pour positionner et ajuster des roues avant et arrière du véhicule afin d'ajuster le véhicule à une première position prédéfinie ;
le mécanisme d'exécution de levage (2) est disposé sur la plate-forme de positionnement (1), la plate-forme de support de levage (3) est reliée au mécanisme d'exécution de levage (2), et le mécanisme d'exécution de levage (2) est utilisé pour entraîner la plate-forme de support de levage (3) pour qu'elle entre en mouvement dans une direction verticale ; et
la plate-forme de support de levage (3) est utilisée pour lever le véhicule sur la plate-forme de positionnement (1) pour que le véhicule quitte la structure de positionnement (14) et soit levé jusqu'à une position prédéfinie d'échange de batterie,
**caractérisé en ce que**
le mécanisme d'exécution de levage (2) comprend une ossature principale (21) et un mécanisme de levage synchrone (22), dans lequel la structure de l'ossature principale (21) comprend une pluralité de structures colonnes (211) disposées à deux extrémités de la plate-forme de positionnement (1) dans la direction de largeur de véhicule, une extrémité de l'ossature principale (21) dans la direction verticale est pourvue de la plate-forme de positionnement (1), et l'autre extrémité de celle-ci dans la direction verticale est pourvue du mécanisme de levage synchrone (22),
dans lequel le mécanisme de levage synchrone (22) comprend des courroies de levage (221) et une partie d'entraînement (222), chacune des courroies de levage (221) est prévue au niveau de la structure colonne respective (211), une extrémité de la courroie de levage (221) est reliée à la partie d'entraînement (222) et l'autre extrémité de celle-ci est prévue sous forme d'extrémité libre (223), et l'extrémité libre (223) est reliée à la plate-forme de support de levage (3),
dans lequel la partie d'entraînement (222) comprend un moteur électrique (201), un arbre de transmission (202) et une courroie de transmission sans fin (203), dans lequel :
le moteur électrique (201) est relié à l'arbre de transmission (202) pour entraîner l'arbre de transmission (202) pour qu'il entre en rotation ;
l'arbre de transmission (202) est relié à la courroie de transmission sans fin (203) pour entraîner la courroie de transmission sans fin (203) pour qu'elle entre en rotation ; et
la courroie de transmission sans fin (203) est reliée à une extrémité de la courroie de levage (221) pour entraîner l'extrémité libre (223) de la courroie de levage (221) pour qu'elle monte ou descende le long de la structure colonne (211) ;
la courroie de transmission sans fin (203) comprend une roue d'entraînement (204), une courroie de transmission (205) et une roue entraînée (206), dans lequel
la roue d'entraînement (204) est reliée à l'arbre de transmission (202) et entre en rotation conjointement avec la rotation de l'arbre de transmission (202) ;
la courroie de transmission (205) relie la roue d'entraînement (204) et la roue entraînée (206) pour former une structure de forme annulaire, et la courroie de transmission (205) entre en rotation dans le sens des aiguilles d'une montre ou dans le sens inverse des aiguilles d'une montre conjointement avec la rotation de la roue d'entraînement (204) et entraîne la roue entraînée (206) pour qu'elle entre en rotation ; et
la courroie de transmission (205) comprend une première section de transmission (207) et une seconde section de transmission (208) qui sont respectivement situées entre la roue d'entraînement (204) et la roue entraînée (206), et la première section de transmission (207) et la seconde section de transmission (208) sont respectivement reliées à une des courroies de levage (221),
dans lequel une roue de renvoi (230) est disposée entre deux extrémités de la courroie de levage (221), et la courroie de levage (221) s'enroule autour de la roue de renvoi (230), avec une extrémité reliée à la plate-forme de support de levage (3) et l'autre extrémité reliée à la première section de transmission (207) ou la seconde section de transmission (208), et
dans lequel, lorsque la courroie de transmission (205) entre en rotation dans le sens des aiguilles d'une montre, la première section de transmission (207) entre en mouvement dans une première direction et la seconde section de transmission (208) entre en mouvement dans une seconde direction, entraînant l'extrémité libre (223) de la courroie de levage (221) pour qu'elle monte le long de la structure colonne (211), ainsi entraînant la plate-forme de support de levage (3) pour qu'elle monte, et dans lequel, lorsque la courroie de transmission (205) entre en rotation dans le sens inverse des aiguilles d'une montre, la première section de transmission (207) entre en mouvement dans la seconde direction et la seconde section de transmission (208) entre en mouvement dans la première direction, ainsi entraînant la plate-forme de support de levage (3) pour qu'elle descende.

2. Système de levage pour échange de batterie d'un véhicule selon la revendication 1, **caractérisé en ce que**
lorsqu'une direction de déplacement est une direction X et une direction de largeur de véhicule est une direction Y, la plate-forme de positionnement (1) comprend en outre :
un corps de plate-forme (11) pour supporter le véhicule ;
une structure rampe (12) disposée à au moins une extrémité, dans la direction X, du corps de plate-forme (11) ; et
une structure guide (13) disposée à deux extrémités, dans la direction Y, du corps de plate-forme (11).

3. Système de levage pour échange de batterie d'un véhicule selon la revendication 1, **caractérisé en ce que**
la structure de positionnement (14) comprend une unité de positionnement en direction X (17) et une unité de positionnement en direction Y (18), dans lequel
l'unité de positionnement en direction X (17) est utilisée pour déterminer la position d'arrêt dans la direction X pour un véhicule arrivant ; et
l'unité de positionnement en direction Y (18) est utilisée pour ajuster les positions de roues avant et de roues arrière dans la direction Y afin de réaliser un positionnement dans la direction Y.

4. Système de levage pour échange de batterie d'un véhicule selon la revendication 2, **caractérisé en ce que**
la plate-forme de positionnement (1) comprend en outre un rail guide (15) et une crémaillère (16), le rail guide (15) et la crémaillère (16) étant incorporés dans la plate-forme de positionnement (1), dans lequel le rail guide (15) est utilisé pour fournir une piste de déplacement pour qu'un chariot d'échange de batterie entre dans, ou sorte de, la plate-forme de positionnement (1) et déterminer une direction de déplacement du chariot d'échange de batterie ; et
la crémaillère (16) est utilisée pour s'engrener avec une pièce d'engrenage sur le chariot d'échange de batterie pour commander la distance de mouvement du chariot d'échange de batterie.

5. Système de levage pour échange de batterie d'un véhicule selon l'une quelconque des revendications 1 à 4, **caractérisé en ce que**
le mécanisme d'exécution de levage (2) comprend en outre une partie de prévention de chute (231), qui est prévue sur la structure colonne (211), pour supporter la plate-forme de support de levage (3) en cas de rupture ou de défaillance de la courroie de levage (221), afin d'empêcher la plate-forme de support de levage (3) de tomber.

6. Système de levage pour échange de batterie d'un véhicule selon l'une quelconque des revendications 1 à 5, **caractérisé en ce que**
la plate-forme de support de levage (3) comprend un cadre de levage (31) et une structure de support (32), dans lequel
le cadre de levage (31) est relié à l'extrémité libre (223) de la courroie de levage (221) ; et
la structure de support (32) est disposée sur le cadre de levage (31) pour supporter un point de levage de véhicule.

7. Système de levage pour échange de batterie d'un véhicule selon la revendication 6, **caractérisé en ce que** la structure de support (32) est pourvue d'un mécanisme de photographie et de positionnement (33) pour photographier et positionner le véhicule et le chariot d'échange de batterie après que le véhicule est levé jusqu'à une première hauteur prédéfinie et le chariot d'échange de batterie entre dans une zone en dessous du véhicule.

8. Système de levage pour échange de batterie d'un véhicule selon la revendication 7, **caractérisé en ce que**
le mécanisme de photographie et de positionnement (33) comprend :
une unité de photographie (331) pour photographier un trou de positionnement d'une carrosserie de véhicule et une goupille de positionnement du chariot d'échange de batterie pour obtenir des données photographiques ;
une unité de calcul (332) pour calculer un écart actuel de position de véhicule selon les données photographiques ; et
une unité d'ajustement précis (333) prévue dans la structure de support (32), pour ajuster la position du véhicule selon l'écart obtenu de position de véhicule.

9. Système de levage pour échange de batterie d'un véhicule selon la revendication 8, **caractérisé en ce que**
il y a une pluralité de structures de support (32) pour supporter différents points de support du véhicule respectivement, et l'unité d'ajustement précis (333) comprend une partie d'entraînement (334) et une partie flottante (335) qui sont prévues sur différentes structures de support (32) et sont agencées dans une direction de déplacement ; la partie d'entraînement (334) entraîne la structure de support correspondante (32) pour qu'elle entre en mouvement dans la direction de déplacement afin d'entraîner le véhicule pour qu'il entre en mouvement ; et la partie flottante (335) est configurée pour flotter avec le mouvement du véhicule afin d'ajuster la position du véhicule.

10. Système de levage pour échange de batterie d'un véhicule selon la revendication 9, **caractérisé en ce que**
la partie flottante (335) comprend :
une unité flottante (336), une unité de support (337) et une unité de remise en place (338), dans lequel
l'unité flottante (336) est supportée sur l'unité de support (337) par l'intermédiaire de billes universelles (339) et est capable de flotter dans un plan horizontal relativement à l'unité de support (337) ; et
l'unité de remise en place (338) est reliée à l'unité flottante (336) pour remettre en place l'unité flottante (336).

11. Système d'échange de batterie, **caractérisé en ce qu'**il comprend un système de levage tel que défini dans l'une quelconque des revendications 1 à 10.
